# EUROPÄISCHE PATENTSCHRIFT

(11) **EP 1 681 186 B1**
(45) Veröffentlichungstag und Bekanntmachung des Hinweises auf die Patenterteilung: **12.09.2007**
(21) Anmeldenummer: 06000372.0
(22) Anmeldetag: 10.01.2006
(51) Int. Cl.: B60G 17/02, B60G 15/06, F16F 15/02

(54) **Federträger mit verstellbarem Federteller**
Spring support with adjustable spring plate
Support de ressort pourvu d'une coupelle réglable

(30) Priorität: 14.01.2005 DE 102005001737
(43) Veröffentlichungstag der Anmeldung: 19.07.2006
(73) Patentinhaber: ZF FRIEDRICHSHAFEN AG, 88046 Friedrichshafen (DE)
(72) Erfinder: Münster, Martin, 88046 Friedrichshafen (DE); Mair, Ulrich, 88045 Friedrichshafen (DE)

(56) Entgegenhaltungen:
- DE-A1- 10 120 102
- DE-A1- 10 122 542
- DE-A1- 10 144 111
- DE-A1- 10 237 644
- DE-A1- 19 955 410
- PATENT ABSTRACTS OF JAPAN Bd. 009, Nr. 242 (M-417), 28. September 1985 (1985-09-28) & JP 60 094810 A (SUZUKI JIDOSHA KOGYO KK), 28. Mai 1985 (1985-05-28)
- PATENT ABSTRACTS OF JAPAN Bd. 2002, Nr. 02, 2. April 2002 (2002-04-02) & JP 2001 301436 A (FUKUTOMI MASAYOSHI), 31. Oktober 2001 (2001-10-31)

## Beschreibung

Die Erfindung betrifft einen Federträger gemäß dem Oberbegriff von Patentanspruch 1.

Aus der DE 102 37 644 A1 oder der DE 199 55 410 A1 ist ein Federträger mit einem höhenverstellbaren Federteller bekannt. Mit einem Aktuator in der Bauform eines E-Motors und einer Gewindespindel-Gewindemutterverbindung kann der Federteller axial verstellt werden. Damit sich der die Gewindemutter mit dem Federteller bei einer Verstellbewegung nicht mitdreht, kommen formschlüssige Verdrehsicherungseinrichtungen in der Bauform einer Linearführung zur Anwendung. Die Linearführung stützt sich zwangsläufig am Federträger ab, wodurch ein komplizierter Gesamtaufbau des Federträgers entsteht.

Die DE 101 22 542 A1 offenbart einen Federträger mit einer schraubenförmige Tragfeder, dessen Federteller mittel einer Gewindespindel höhenverstellbar ist. Der Steigungswinkel der Schraubenfeder verläuft gegenläufig zum Steigungswinkel der Gewindespindel. Zwischen dem Federteller und der Kolbenstange eine besteht eine formschlüssige Verdrehsicherung.

Aufgabe der vorliegenden Erfindung ist es, eine Verdrehsicherung des Federtellers mit möglichst einfachen Mitteln zu erreichen.

Erfindungsgemäß wird die Aufgabe dadurch gelöst, dass der Steigungswinkel der federnden Windungen der Tragfeder gegenläufig zum Steigungswinkel der Gewindespindel ausgeführt ist, um die Verdrehsicherung des verstellbaren Federtellers zu erreichen.

Der große Vorteil besteht darin, dass man auf eine Verdrehsicherung in der Bauform einer Linearführung vollständig verzichten kann. Dadurch ergibt sich eine drastische Vereinfachung der konstruktiven Ausgestaltung des Federträgers.

In weiterer vorteilhafter Ausgestaltung kommen zwei schraubenförmige Tragfedern zur Anwendung, die an gegenüberliegenden Abstützflächen des verstellbaren Federtellers angreifen, wobei beide Federn dieselbe Steigungsrichtung aufweisen. Eine der Federn trägt die Grundlast, hingegen übernimmt die andere Feder die dynamischen Belastungsanteile.

Gemäß einem vorteilhaften Unteranspruch weist die Feder bezogen auf ihre Längsachse auf beiden Seite eine gleiche Anzahl von federnden Windungen aufweist. Der vertikale Kraftvektor verläuft dann exakt konzentrisch zur Federquerschnittsfläche.

Des weiteren ist vorgesehen, dass bezogen auf die Winkelstellung in Umfangsrichtung der beiden Federn am Endpunkt der einen Feder auf der gegenüberliegenden Stützfläche der Anfang der zweiten Feder angeordnet ist. Die Drehmomente der Federn können sich aufheben oder zumindest teilkompensieren.

Ein besonders guter Drehmomentausgleich wird dann erreicht, wenn das Produkt aus Federaxialkraft und Windungsdurchmesser bei beiden Federn im wesentlichen gleich ist.

Etwaige Fertigungstoleranzen der mindestens einen Feder lassen sich besonders gut kompensieren, wenn der nicht verstellbare Federteller in Umfangsrichtung zumindest geringfügig verdrehbar ausgeführt ist.

Anhand der folgenden Figurenbeschreibung soll die Erfindung näher erläutert werden.

Es zeigt:

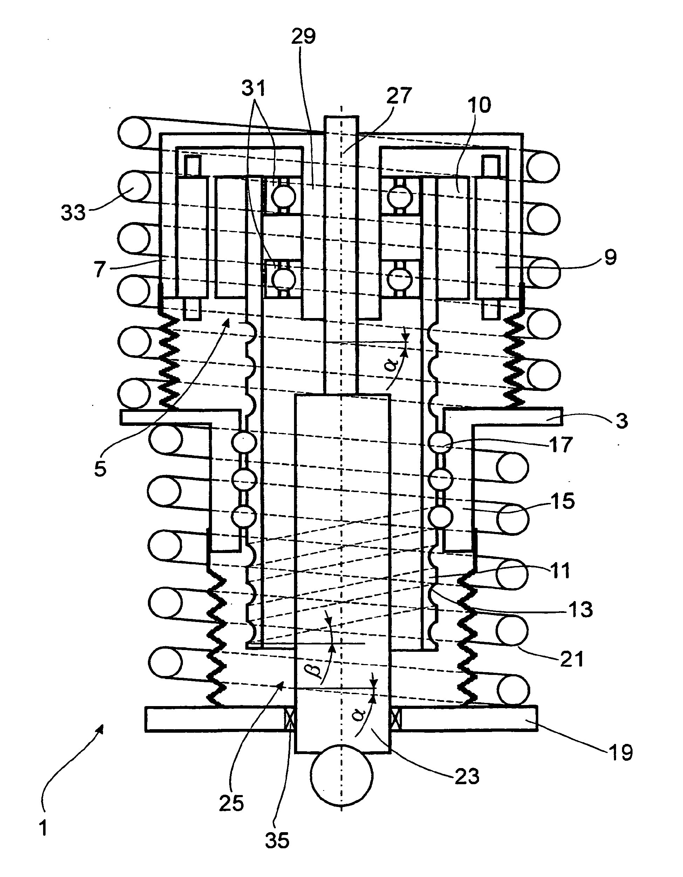

Die einzige Figur zeigt eine Prinzipskizze eines Federträgers 1, wie er z. B. zwischen einem Fahrzeugaufbau und einem Achsteil zur Anwendung kommen kann. Der Federträger umfasst einen ersten Federteller 3, der in seiner axialen Position verstellbar ist. Dafür verfügt der Federträger über einen Drehantrieb 5 z. B. in der Ausgestaltung eines E-Motors. In einem Gehäuse 7, das mit dem besagten Fahrzeugaufbau verbunden ist, befindet sich ein Stator 9, der einen Rotor 10 antreibt. Der Rotor ist wiederum fest mit einer Gewindespindel 11 verbunden, die auf ihrem Außendurchmesser ein Bewegungsgewinde 13 aufweist, in das eine Gewindemutter 15, die mit dem verstellbare Federteller 3 verbunden ist, ggf. unter Verwendung von Kugeln 17 eingreift. Eine Drehbewegung des Rotors wird von der Gewindespindel-Gewindemutter in eine axiale Verstellbewegung des Federtellers 3 umgesetzt.

Zwischen dem verstellbaren Federteller 3 und einem zweiten Federteller 19 ist eine erste schraubenförmige Tragfeder 21 verspannt. Ein Steigungswinkel α der federnden Windungen der Tragfeder 21 ist gegenläufig zu einem Steigungswinkel β des Bewegungsgewindes ausgeführt. Eine zweite 33 Feder, die an einer der ersten Feder gegenüberliegenden Stützfläche des verstellbaren Federtellers 3 angreift, weist die selbe Steigungsrichtung wie der Steigungswinkel α der ersten Feder 21 auf. Jede der Federn weist bezogen auf ihre Längsachse eine gleiche Anzahl von federnden Windungen auf.

Des weiteren ist bezogen auf die Winkelstellung in Umfangsrichtung der beiden Federn am Endpunkt der einen Feder auf der gegeüberliegenden Abstützfläche der Anfang der zweiten Feder angeordnet. Das Produkt aus Federaxialkraft und Windungsdurchmesser soll bei beiden Federn im wesentlichen gleich groß sein. Die zweite Feder 33 verfügt über einen Innendurchmesser, der größer ist als der Außendurchmesser des Stators 9 und kann sich direkt an dem Fahrzeugaufbau oder z. B. an einem Federteller als Teil des Gehäuses 7 abstützen.

Werden die Feder bei einer Einfederungsbewegung des Federträgers komprimiert, verformt sich die Endwindung weiter in Windungsrichtung und erzeugt damit ein Drehmoment in Windungsrichtung auf den Federteller. Dieses Drehmoment ist der Gewindesteigung des Bewegungsgewindes entgegengerichtet.

Der zweite Federteller 19 ist axial ortsfest aber bevorzugt durch ein Lager 35 in Umfangsrichtung geringfügig verdrehbar zu einem Zylinder 23 eines Schwingungsdämpfers 25 angeordnet, der koaxial zum Drehantrieb 5 positioniert ist. In dem Zylinder kann eine Kolbenstange 27 eine axiale Verschiebebewegung ausführen. Der Aufbau eines konventionellen Schwingungsdämpfers wird als bekannt vorausgesetzt. Beispielhaft wird auf die DE 37 32 978 A1 verwiesen.

Die Gewindespindel weist einen größeren Innendurchmesser auf als der Zylinder, so dass der Zylinder innerhalb der Gewindespindel endet. Am anderen Ende ist die Gewindespindel auf einem ortsfest zum Stator 9 befindlichen Führungsrohr 29 mittels Lager 31 gelagert. Durch das Führungsrohr verläuft die Kolbenstange 27 des Schwingungsdämpfers 25.

Werden die Feder bei einer Einfederungsbewegung des Federträgers komprimiert, verformen sich die Endwindungen beider Federn 21; 33 weiter in Windungsrichtung und erzeugen damit ein Drehmoment in Windungsrichtung auf den Federteller. Dieses Drehmoment ist der Gewindesteigung des Bewegungsgewindes entgegengerichtet, so dass eine Verdrehbewegung des Federtellers aufgrund der Drehbewegung der Gewindespindel unterdrückt wird.

## Patentansprüche

1. Federträger, umfassend eine erste Baugruppe (19, 21) und eine dazu axial relativ bewegliche zweite Baugruppe (7, 23, 27, 29, 33) wobei zwischen den beiden Baugruppen mindestens eine schraubenförmige Tragfeder (21) zwischen Federtellern (3, 19) angeordnet ist, von denen mindestens einer mittels eines Aktuators (9, 10) in Verbindung mit einer Gewindespindel (11) und einer Gewindemutter (15) in seiner axialen Position einstellbar ist, wobei die Gewindemutter (15) verdrehgesichert ist,
**dadurch gekennzeichnet,**
**dass** der Steigungswinkel α der federnden Windungen der Tragfeder (21; 33) gegenläufig zum Steigungswinkel β der Gewindespindel (11) ausgeführt ist, um die Verdrehsicherung des verstellbaren Federtellers (3) zu erreichen.

2. Federträger nach Anspruch 1,
**dadurch gekennzeichnet,**
**dass** zwei schraubenförmige Tragfedern (21; 33) zur Anwendung kommen, die an gegenüberliegenden Abstützflächen des verstellbaren Federtellers (3) angreifen, wobei beide Federn (21; 33) dieselbe Steigungsrichtung aufweisen.

3. Federträger nach Anspruch 1,
**dadurch gekennzeichnet,**
**dass** die Feder (21; 33) bezogen auf ihre Längsachse auf beiden Seiten eine gleiche Anzahl von federnden Windungen aufweist.

4. Federträger nach Anspruch 2,
**dadurch gekennzeichnet,**
**dass** bezogen auf die Winkelstellung in Umfangsrichtung der beiden Federrr (21; 33) am Endpunkt der einen Feder (21)auf der gegenüberliegenden Stützfläche der Anfang der zweiten Feder (33) angeordnet ist.

5. Federträger nach Anspruch 2,
**dadurch gekennzeichnet,**
**dass** das Produkt aus Federaxialkraft und Windungsdurchmesser bei beiden Federn (21; 33) im wesentlichen gleich ist.

6. Federträger nach Anspruch 1,
**dadurch gekennzeichnet,**
**dass** der nicht verstellbare Federteller (19) in Umfangsrichtung zumindest geringfügig verdrehbar ausgeführt ist.

## Claims

1. Spring support, comprising a first sub-assembly (19, 21) and a second sub-assembly (7, 23, 27, 29, 33) axially movable relative to the former, at least one coil suspension spring (21) between the two subassemblies being arranged between spring plates (3, 19), at least one of which by means of an actuator (9, 10) in conjunction with a threaded spindle (11) and a threaded nut (15) being adjustable in its axial position, the threaded nut (15) being torsionally secured, **characterized in that** the lead angle α of the spring coils of the suspension spring (21; 33) runs counter to the lead angle β of the threaded spindle (11), in order to secure the adjustable spring plate (3) against torsion.

2. Spring support according to Claim 1, **characterized in that** two coil suspension springs (21; 33) are used, which act on opposing support faces of the adjustable spring plate (3), both springs (21; 33) being coiled in the same direction.

3. Spring support according to Claim 1, **characterized in that** the springs (21; 33) have an equal number of spring coils about their longitudinal axis on both sides.

4. Spring support according to Claim 2, **characterized in that** relative to the angular position in a circumferential direction of the two springs (21; 33), the start of the second spring (33) is arranged at the end point of the one spring (21) on the opposite support face.

5. Spring support according to Claim 2, **characterized in that** the product of the spring axial force and the winding diameter is essentially equal in both springs (21; 33).

6. Spring support according to Claim 1, **characterized in that** the non-adjustable spring plate (19) is designed to be capable at least of slight rotation in a circumferential direction.

## Revendications

1. Support de ressort, comprenant un premier sous-ensemble (19, 21) et un deuxième sous-ensemble (7, 23, 27, 29, 33) mobile axialement par rapport au premier, sachant qu'au moins un ressort porteur hélicoïdal (21) est disposé entre les deux sous-ensembles, entre des coupelles de ressort (3, 19) dont au moins une est de position axiale réglable au moyen d'un actionneur (9, 10) conjointement avec une broche filetée (11) et un écrou (15), l'écrou (15) étant bloqué en rotation,
**caractérisé en ce que** l'angle de pas α des spires élastiques du ressort porteur (21 ; 33) est réalisé en sens contraire de l'angle de pas β de la broche filetée (11), afin d'obtenir le blocage en rotation de la coupelle de ressort réglable (3).

2. Support de ressort selon la revendication 1, **caractérisé en ce qu'**on utilise deux ressorts porteurs hélicoïdaux (21 ; 33) qui agissent sur des faces de soutien opposées de la coupelle de ressort réglable (3), les deux ressorts (21 ; 33) présentant le même sens de pas.

3. Support de ressort selon la revendication 1, **caractérisé en ce que** le ressort (21 ; 33) présente, relativement à son axe longitudinal, un nombre identique de spires élastiques des deux côtés.

4. Support de ressort selon la revendication 2, **caractérisé en ce que**, relativement à la position angulaire dans la direction circonférentielle des deux ressorts (21 ; 33), le début du deuxième ressort (33) est disposé au point terminal du premier ressort (21), sur la face de soutien opposée.

5. Support de ressort selon la revendication 2, **caractérisé en ce que** le produit de la force axiale du ressort et du diamètre des spires est sensiblement identique pour les deux ressorts (21 ; 33).

6. Support de ressort selon la revendication 1, **caractérisé en ce que** la coupelle de ressort non réglable (19) est réalisée au moins légèrement rotative en direction circonférentielle.
